# EUROPEAN PATENT APPLICATION

(11) **EP 1 719 552 A2**
(43) Date of publication of application: **08.11.2006**
(21) Application number: 06007990.2
(22) Date of filing: 18.04.2006
(51) Int. Cl.: B01F 7/30, F16H 1/28, A47J 43/044, A47J 43/08

(54) **A planetary mixing head in a machine for kneading food products**

(30) Priority: 19.04.2005 IT PR20050017
(71) Applicant: Tonelli Group S.p.A., 43044 Collecchio (IT)
(72) Inventor: Melegari, Marco, 43100 Parma (IT)
(74) Representative: Gotra, Stefano

(57) **Abstract**

A mixing head in a machine for kneading food products comprises one or more mixing elements (5), movable by rotation around their own axes, a support element (2), whereto are connected the mixing elements (5), a shaft (1), whereto is rotatably associated the support element (2) actuated by a motorization, and a gearing (7) transferring motion from the support element (2) to the mixing elements (5); said gearing (7) in turn comprising: gears (9) integral with the mixing elements (5), a gear wheel (8) keyed on the shaft (1) and satellite gears (10) interposed between the gears (9) integral with the mixing elements (5) and the gear wheel (8), in such a way that the mixing elements (5) rotate around their own axes, and, in the opposite direction, around the central axis. Said head comprises, advantageously, four tools (5, 6).

## Description

The present invention relates to a planetary mixing head in a machine for kneading food products, said head comprising one or more mixing elements, movable by rotation around their own axes, a support element, whereto are connected the mixing elements, a shaft, whereto is rotatably associated the support element and a motorization operatively active on said support element to set it in rotation around a central axis defined by said shaft.

Within the field of mixing food products, appropriate mixing means are used, i.e. one or more whips or other types of tools, which are actuated to mix the food products within a container. In particular, the mixing means are comprised in a mixing head, which provides for their actuation. Within this field, it is known that mixing is particularly effective if said mixing means are actuated according to a so-called planetary motion. Said planetary motion entails, for each whip or tool, a rotation around a central axis of the head and a simultaneous counter-rotation around its own axis. Thus, the tools, which rotate on themselves and simultaneously rotate, in the opposite direction, around a central axis, recall the planets subjected to rotation and revolution motions, respectively, hence the planetary adjective.

With regard to the accomplishment of said planetary motion in the mixing heads of kneading machines, known technical solutions provide the following. A shaft is rotatable coupled to a support element, constituted for example by a disk. To the support element are associated the whips, so they can rotate around their own axis. Said shaft, drive shaft, is set in rotation by a motorization, by means of a first pulley; the same shaft, through a reduction unit, transmits the motion to the whips. In practice, each whip is fastened on its own shaft, whereon is keyed a gear wheel which meshes on a gear wheel keyed on the drive shaft; simultaneously, the support element is set in rotation through a second pulley. Hence, the power delivered by the motorization is split in two components: a first component causes the rotation of the support element, thereby setting each whip in rotation around a central axis; a second component causes each whip to rotate around its own axis in the opposite direction, through the drive shaft.

Known solutions do in fact allow to impart the desired planetary motion to the mixing means, but they have some disadvantages. In particular, the power delivered by the motorization is not exploited optimally, because it is split in two components able to induce rotation in the opposite direction. Moreover, said solutions are particularly costly, because of the need to actuate two pulleys with a same motorization, or even to double the motorization. Note also that the speed with which a tool rotates around its own axis and the speed with which the same tool rotates around the central axis must have an appropriate ratio, e.g. 1:5, to optimise the mixing, this entailing a heavier burden in terms of costs and of complication in the transmission of the motion to two different pulleys.

It should also be observed that, in known technical solutions, a mixing head comprises at most three tools, whereof two are rotating around their own axis and one fixed with respect to its own axis; this entailing a limitation in the efficiency of the mixing or trituration of the processed food products and in mixing times.

An object of the present invention is to eliminate the aforesaid drawbacks and to make available a mixing head in a kneading machine for food products, which achieves a planetary motion of the mixing means in efficient and economical fashion. Another object of the present invention is to reduce kneading times, thanks to a greater mixing efficiency.

Said objects are fully achieved by the mixing head of the present invention, which is characterised by the content of the claims set out below and in particular in that it comprises a gearing for transferring motion from a support element to the mixing elements to set them in rotation around their own axes.

This and other characteristics shall become more readily apparent in the description that follows of a preferred embodiment, illustrated purely by way of non limiting example in the accompanying drawing tables, in which:
Figure 1 shows a section view of a portion of the mixing head of the present invention;
Figure 2 shows a front view of a portion of the mixing head of the present invention;
Figure 3 shows a top view of another portion of the mixing head of the present invention.

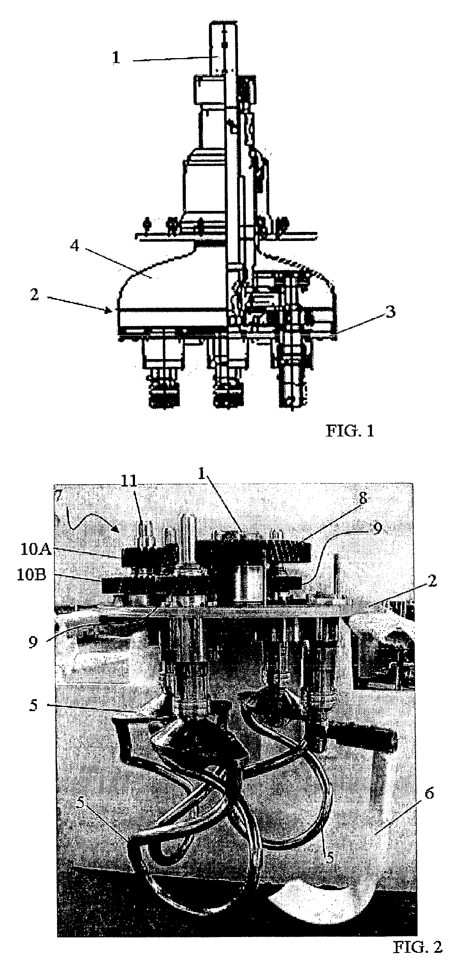

In Figure 1, the reference number 1 designates a shaft, whereto is rotatably associated a support element 2 or casing. The support element 2, in particular, preferably comprises a disk 3 and a covering element 4.

The support element 2 is connected, preferably by means of a pulley, to a motorization (not shown in the figures and known in itself), so that it rotates around the shaft 1 which, originally, is fixed.

In Figure 2, the reference number 5 designates mixing elements, constituted, in the illustrated embodiment, by three whips. It should be noted that said whips can be replaced with other types of tools for the treatment of food products and can be in any number, subject to the space limitations imposed by the dimensions of the head as a whole. Among the possible solutions: 3 whips, 2 whips and 1 cutter, 2 cutters and 1 whip. Each mixing element 5 is movable by rotation around its own axis, which is preferably parallel to a central axis defined by the shaft 1. The mixing elements 5 are associated to the support element 2, which supports their weight. In the illustrated embodiment, to the support element 2 is fastened a scraping element 6 (which is fixed, in the sense that it does not rotate around its own axis), which is also replaceable with another type of tool.

The support element 2, which receives a driving torque from the motorization, rotates around the central axis defined by the shaft 1; in this way, the mixing elements 5 and the scraping element 6 rotate around the central axis defined by the shaft 1, integrally with the support element 2. Moreover, the support element 2 originally transfers to the mixing elements 5 a rotary motion around their own axes, through a gearing 7.

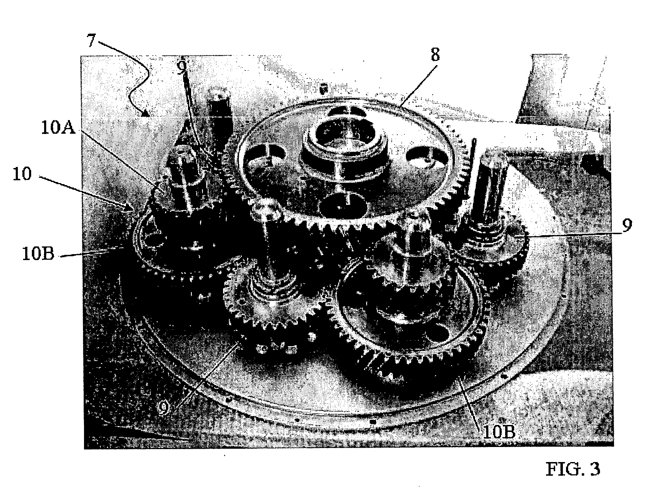

The gearing 7, shown in detail in Figure 3, comprises a gear wheel 8 keyed on the shaft 1, hence fixed. Moreover, the gearing 7 comprises gears 9 integral to the mixing elements 5 and satellite gears 10, keyed on auxiliary shafts 11 rotatably associated to the support element 2. In particular, on each auxiliary shaft 11 are keyed two satellite gears 10; a first satellite gear 10A meshes with the gear wheel 8, whilst a second satellite gear 10B meshes with at least one integral gear 9 and a mixing element 5.

In the illustrated embodiment, the mixing head comprises three mixing elements 5; hence, the gearing 7 comprises three gears integral with the mixing elements 5, preferably equally spaced at 90° from each other. Moreover, the gearing 7 comprises two auxiliary shafts 11, whereon are keyed two pairs of satellite gears 10. In particular, in a preferred embodiment each satellite gear 10B meshes with two of the three gears 9 integral with the mixing element 5. Said gearing 7 constitutes, originally, a particularly robust and compact configuration. In a preferred embodiment, the three mixing elements 5 rotate around the central axis having a same circumference as the trajectory. In a preferred embodiment, the mixing elements 5 are positioned in such a way that the axes of two of them are on a diameter of said circumference, whilst the axis of the third mixing element is equidistant from the other two. In this way, the axes of rotation of the three mixing elements 5, intersected with a plane orthogonal to them, define the vertices of an equilateral triangle and lie on said circumference.

It should be observed that the gearing 7 constitutes an epicycloidal multiplier, in the transmission of motion from the support element 2 to the mixing elements. In a preferred embodiment, the multiplication ratios achieved by the gearing 7 in the transmission of motion to the three mixing elements 5 are equal, with the consequence that the mixing elements 5 rotate around their axes with the same speed. However, with the gearing 7 it is also possible to obtain different multiplication ratios for the different mixing elements 5. The ratio between the velocity of rotation of a mixing element 5 around its own axis and the velocity of rotation of the same mixing element 5 around the central axis is determined by the gearing 7; in particular, the gearing 7 establishes a determined multiplication ratio, according to the ratio between the number of teeth of the gear wheel 8 and of a first satellite gear 10A and the ratio between the number of teeth of a second satellite gear 10B and a gear 9 integral with a mixing element 5.

The gearing 7 is made further stronger by means of a bracketing of the auxiliary shafts 11, together with any shafts defined by the mixing elements 5, on the covering element 4. In Figure 3 it is readily apparent that the auxiliary shafts 11 extend superiorly to the gears 9 and 10 to be inserted in seats, not shown, obtained in the covering element 4. It should be noted that the shafts whereon the gears of the gearing 7 are keyed are coupled to the support element 2 by means of bearings or other known rotary supports.

In the mixing head of the present invention, the torque delivered by the motorization is originally applied entirely to the support element 2, which is set in rotation with respect to the fixed shaft 1. The rotary motion of the mixing element 5 is originally derived from the motion of the support element through the epicycloidal multiplier achieved by the gearing 7. Therefore, the technical solution described herein is particularly effective, in that it minimises power losses in the transmission of motion, and economical, in that it requires no complicated transmission means to fraction the power delivered by the motorization.

It should also be noted that the mixing head of the present invention enables to reduce kneading times, improving mixing efficiency, because it originally comprises four tools, whereof three are movable with planetary motion and a fourth one is fixed with respect to the support element 2.

## Claims

1. A mixing head in a machine for kneading food products, comprising:
- one or more mixing elements (5), movable by rotation around their own axes;
- a support element (2), whereto are connected the mixing elements (5);
- a shaft (1), whereto is rotatably associated the support element (2);
- a motorization operatively active on said support element (2) to set it in rotation around a central axis defined by said shaft (1),
**characterised in that** it comprises a gearing (7) which transfers motion from the support element (2) to the mixing elements (5) to set them in rotation around their own axes maintaining the shaft fixed (1).

2. Mixing head as claimed in claim 1, **characterised in that** said gearing (7) comprises:
- gears (9) integral with the mixing elements (5);
- a gear wheel (8) keyed on the shaft (1);
- satellite gears (10) interposed between the gears (9) integral with the mixing elements (5) and the gear wheel (8), in such a way that the mixing elements (5) rotate around their own axes in the opposite direction with respect to the rotation around the central axis.

3. Mixing head as claimed in claim 2, comprising at least one auxiliary shaft (11) rotatably associated to the support element (2), whereon are keyed a first satellite gear (10A), which meshes with said gear wheel (8) and a second satellite gear (10B), which meshes at least with one gear (9) integral with a mixing element (5).

4. Mixing head as claimed in any of the previous claims, wherein said gearing (7) achieves multiplication ratios in the transmission of motion from the motorization to the mixing elements (5).

5. Mixing head as claimed in claim 4, wherein said gearing (7) achieves the same multiplication ratio for each mixing element (5), so that all the mixing elements (5) rotate with the same speed.

6. Mixing head as claimed in any of the previous claims, **characterised in that** it comprises three mixing elements (5).

7. Mixing head as claimed in claim 3, **characterised in that** it comprises two auxiliary shafts (11) for the satellite gears (10).

8. Mixing head as claimed in claim 7, wherein, for each auxiliary shaft (11), said second satellite gear (10B) meshes with two gears (9) integral with mixing elements (5).

9. Mixing head as claimed in any of the previous claims, comprising a scraping element (6), fastened to the support element (2), to rotate around the central axis.

10. Mixing head as claimed in any of the previous claims, wherein a torque delivered by the motorization is entirely applied to the support element (2).

11. Mixing head as claimed in claim 10, wherein said torque is transmitted from the motorization to the support element (2) through a pulley that is integral to the support element.

12. Mixing head as claimed in claim 6, wherein the three mixing elements (5) are equidistant from said central axis.

13. Mixing head as claimed in claim 2, wherein the shafts of the gears (9, 10) are superiorly inserted in seats defined in a covering element (4).

14. Mixing head as claimed in any of the previous claims, **characterised in that** it comprises four tools associated to the support element (2), whereof three mixing elements (5) rotating around their own axes and a fourth tool (6) fixed relative to said support element.
